Europäisches Patentamt

European Patent Office

Office européen des brevets

(11) Veröffentlichungsnummer: **0 319 765**

**A2**

(12) **EUROPÄISCHE PATENTANMELDUNG**

(21) Anmeldenummer: **88119378.3**

(22) Anmeldetag: **22.11.88**

(51) Int. Cl.⁴: **B62D 53/08**

(30) Priorität: **05.12.87 DE 3741276**

(43) Veröffentlichungstag der Anmeldung:
**14.06.89 Patentblatt 89/24**

(84) Benannte Vertragsstaaten:
**AT BE CH DE ES FR GB IT LI NL SE**

(71) Anmelder: **Jost-Werke GmbH**
**Siemensstrasse 2**
**D-6078 Neu Isenburg(DE)**

(72) Erfinder: **Dreyer, Hans**
**Wolfgang-Borchert-Strasse 13**
**D-6073 Egelsbach-Bayerseich(DE)**

(74) Vertreter: **Köhler, Günter, Dipl.-Ing.**
**Nordring 1**
**D-6458 Rodenbach(DE)**

(54) **Kupplungseinrichtung.**

(57) Eine Kupplungseinrichtung zum Verbinden eines ziehenden und eines gezogenen Fahrzeugs ist mit einer weitgehend horizontalen Sattelplatte (4) an dem einen Fahrzeug versehen, die beim Verbinden der Fahrzeuge mit einer Sattelplatte (12) an dem anderen Fahrzeug zur Anlage kommt und um eine sich in Fahrtrichtung erstreckende Längsachse und eine Querachse schwenkbar ist. Die eine Sattelplatte (4) hat einen Einführungsschlitz (9) zum Einführen eines an der anderen Sattelplatte (12) befestigten Zugsattelzapfens (10) mit einem Spiel (19) zwischen Einführungsschlitz (9) und Zugsattelzapfen (10). Ferner ist unter der einen Sattelplatte (4) ein Verschluß-haken (24) für den Eingriff in eine Ringnut (25) des Zugsattelzapfens (10) schwimmend gelagert. Um auf einfache Weise einen großen Schwenkwinkelbereich der beiden Fahrzeuge relativ zueinander um die Längsachse ohne übermäßige Beanspruchung der Kupplungseinrichtung zu erzielen, ist dafür gesorgt, daß die am gezogenen Fahrzeug (2) angebrachte, den Zugsattelzapfen (10) tragende Sattelplatte (12) um die Längsachse (5) relativ zum gezogenen Fahrzeug (2) schwenkbar gelagert ist.

FIG.4

## Kupplungseinrichtung

Die Erfindung bezieht sich auf eine Kupplungseinrichtung zum Verbinden eines ziehenden und eines gezogenen Fahrzeugs, insbesondere eine Sattelkupplung zum Ankuppeln eines Sattelanhängers, insbesondere Sattel-Zentralachsanhängers, an einem Sattelzugfahrzeug, mit einer weitgehend horizontalen Sattelplatte an dem einen Fahrzeug, die beim Verbinden der Fahrzeuge mit einer Sattelplatte an dem anderen Fahrzeug zur Anlage kommt und um eine sich in Fahrtrichtung erstreckende Längsachse und eine Querachse schwenkbar ist, wobei die eine Sattelplatte einen Einführungsschlitz zum Einführen eines an der anderen Sattelplatte befestigten Zugsattelzapfens mit einem Spiel zwischen Einführungsschlitz und Zugsattelzapfen aufweist und unter der einen Sattelplatte ein Verschlußhaken für den Eingriff in eine Ringnut des Zugsattelzapfens schwimmend gelagert ist.

Eine derartige Sattelkupplung ermöglicht eine Quer- und Längsneigung des Sattelanhängers relativ zum Zugfahrzeug um die Längs- bzw. Querachse bei unebenem Gelände, insbesondere bei Kurvenfahrt. Hierfür sind bekannte Sattelkupplungen mit einem Kardangelenk ausgestattet. Ein Kardangelenk ist jedoch aufwendig.

Zwar können die Sattelkupplungsplatten bei herkömmlichen Sattelkupplungen, bei denen die Sattelkupplungsplatte nur um die Querachse mittels Drehlagern schwenkbar ist, auch im Rahmen eines Teils des Spiels zwischen Sattelkupplungszapfen (auch "Königszapfen" genannt) und Einführungsschlitz bzw. einem in einer nach unten vorstehenden vertieften Schulter des Einführungsschlitzes eingesetzten Verschleißring und aufgrund einer schwimmenden Lagerung des Verschlußhakens um die Längsachse pendeln, doch ist der Schwenkwinkelbereich um die Längsachse häufig zu gering, weil vor dem Anschlagen des pendelnden Zugsattelzapfens an den Kanten des Einführungsschlitzes oder Verschleißrings und dem Anschlagen des durch den unteren, die Ringnut im Zugsattelzapfen begrenzenden Zugsattelzapfen-Bund ebenfalls verschwenkten Verschlußhakens an der Unterseite der Schulter der seitliche Rand der Sattelanhängerplatte auf der Oberseite der Sattelkupplungsplatte aufschlägt.

Der Erfindung liegt die Aufgabe zugrunde, eine Kupplungseinrichtung der gattungsgemäßen Art anzugeben, die auf einfache Weise einen großen Schwenkwinkelbereich der beiden Fahrzeuge relativ zueinander um die Längsachse ohne übermäßige Beanspruchung der Kupplungseinrichtung ermöglicht.

Erfindungsgemäß ist diese Aufgabe dadurch gelöst, daß die am gezogenen Fahrzeug angebrachte, den Zugsattelzapfen tragende Sattelplatte um die Längsachse relativ zum gezogenen Fahrzeug schwenkbar gelagert ist.

Ein noch größerer Schwenkwinkelbereich um die Längsachse ergibt sich, wenn eine der Sattelplatten auf ihrer Anlageseite konvex ist.

Bei dieser Lösung können die Sattelplatten, gegebenenfalls unter Ausnutzung des Spiels zwischen Sattelkupplungszapfen und Einführungsschlitz, in einem zusätzlichen Winkelbereich relativ zueinander und damit auch die beiden Fahrzeuge relativ zueinander um die Längsachse geschwenkt werden.

Vorzugsweise ist bei einer Kupplungseinrichtung dieser Art, bei der die eine Sattelplatte am Rande des inneren Endes des Einführungsschlitzes mit einer auf der Unterseite der einen Sattelplatte vorstehenden Schulter versehen ist, unter der der Verschlußhaken gelagert ist, dafür gesorgt, daß die Unterseite der Schulter zum Verschlußhaken hin konvex ist. Dies ermöglicht auch bei einer Kupplungseinrichtung mit einer derartigen Schulter auf der Unterseite der einen Sattelplatte einen größeren Schwenkwinkelbereich der anderen Sattelplatte relativ zu der einen Sattelplatte um die Längsachse.

Wenn die Unterseite der Schulter ballig ausgebildet ist, bleibt der Verschlußhaken im Verlaufe der Verschwenkung der anderen Sattelplatte unter stetiger Anlage an dieser Unterseite.

In weiterer Ausgestaltung kann vorgesehen sein, daß die Anlageseite der einen Sattelplatte in einem Bereich außerhalb eines an den Einführungsschlitz angrenzenden, weitgehend ebenen Anlagebereiches für die andere Sattelplatte abfällt. Auf diese Weise ist in der Normalstellung des Anhängers relativ zum Zugfahrzeug eine verhältnismäßig hoch belastbare ebene Anlagefläche zwischen den beiden Sattelplatten sichergestellt, die zumindest der Sattellast eines Sattel-Zentralachsanhängers standhält.

Vorzugsweise weist die Anlageseite der einen Sattelplatte außerhalb des weitgehend ebenen Anlagebereiches einen konischen Bereich auf. Eine konische Anlagefläche läßt sich verhältnismäßig einfach herstellen. Dennoch tritt wenigstens eine Linienberührung zwischen den Sattelplatten im konischen Bereich der einen Sattelplatte auf, so daß die Kupplungseinrichtung weiterhin hohen Sattellasten standhält, insbesondere der Sattellast eines Sattel-Zentralachsanhängers.

Sodann kann dafür gesorgt sein, daß der Übergang vom weitgehend ebenen Anlagebereich zum konischen Bereich der einen Sattelplatte abgerundet ist. Auf diese Weise wird ein plötzliches Kippen des Anhängers um die Längsachse und der damit verbundene Stoß weitgehend vermieden.

Die Neigung im konischen Bereich der Anlageseite der einen Sattelplatte und gegebenenfalls der Unterseite der Schulter läßt sich im Rahmen des Spiels zwischen Zugsattelzapfen und Einführungsschlitz bzw. Verschleißring noch weiter vergrößern und damit auch der Schwenkwinkelbereich um die Längsachse, wenn die Kanten der Anlagefläche für den Zugsattelzapfen abgeschrägt oder abgerundet sind oder die gesamte Anlagefläche abgerundet ist.

Die Erfindung und ihre Weiterbildungen werden nachstehend anhand der Zeichnung eines bevorzugten Ausführungsbeispiels näher beschrieben. Es zeigen:

Fig. 1 eine schematische Draufsicht auf eine Sattelzugmaschine mit einem Sattelanhänger, die durch eine Sattelkupplung verbunden sind, in einer 90°-Stellung relativ zueinander bei Kurvenfahrt,

Fig. 2 eine Draufsicht auf eine erfindungsgemäß ausgebildete Sattelkupplung,

Fig. 3 einen Vertikalschnitt durch die Sattelkupplung nach Fig. 2 und den Sattelanhänger in der Querebene III-III der Fig. 5 in unverschwenkter Parallellage der Sattelanhängerplatte relativ zur Sattelkupplungsplatte,

Fig. 4 die gleiche Ansicht wie die nach Fig. 3, jedoch bei einer Querneigung des Sattelanhängers relativ zur Sattelzugmaschine,

Fig. 5 den Axialschnitt V-V der Fig. 3 ohne die am Zugfahrzeug vorgesehene Sattelkupplung,

Fig. 6 den Horizontalschnitt VI-VI nach Fig. 5 und

Fig. 7 Einzelteile der Sattelkupplung nach den Fig. 2 bis 4 in Draufsicht, teilweise im Horizontalschnitt.

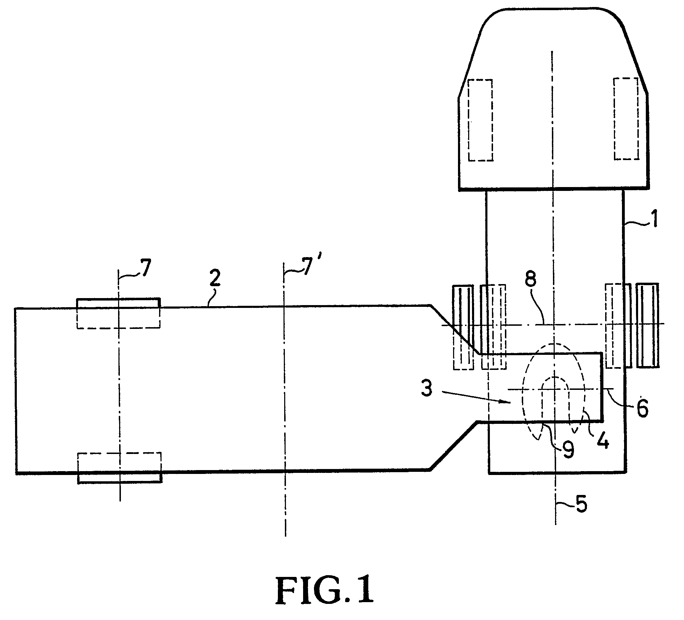

Nach Fig. 1 sind eine das ziehende Fahrzeug bildende Sattelzugmaschine 1 und ein das gezogene Fahrzeug bildender Sattelanhänger 2 durch eine an der Sattelzugmaschine 1 befestigte Kupplungseinrichtung in Form einer Sattelkupplung 3 verbunden, deren in Draufsicht etwa hufeisenförmige, die eine Sattelplatte bildende Sattelkupplungsplatte 4 um eine sich in Fahrtrichtung erstreckende Längsachse 5 zusammen mit der Sattelzugmaschine 1 relativ zum Sattelanhänger 2, dagegen zusammen mit dem Sattelanhänger 2 um eine Querachse 6 relativ zur Sattelzugmaschine schwenkbar ist, so daß unzulässig hohe Biegebeanspruchungen der Sattelkupplungsplatte 4 bei unebenem Gelände vermieden werden, insbesondere in der dargestellten 90°-Stellung von Zugmaschine 1 und Sattelanhänger 2 bei Kurvenfahrt, wenn die Hinterradachse 7 des Sattelanhängers 2 höher oder niedriger liegt als die Hinterradachse 8 der Sattelzugmaschine 1.

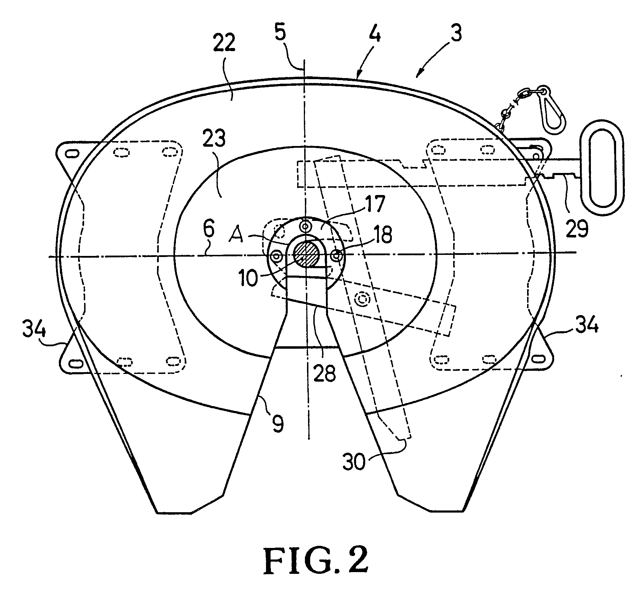

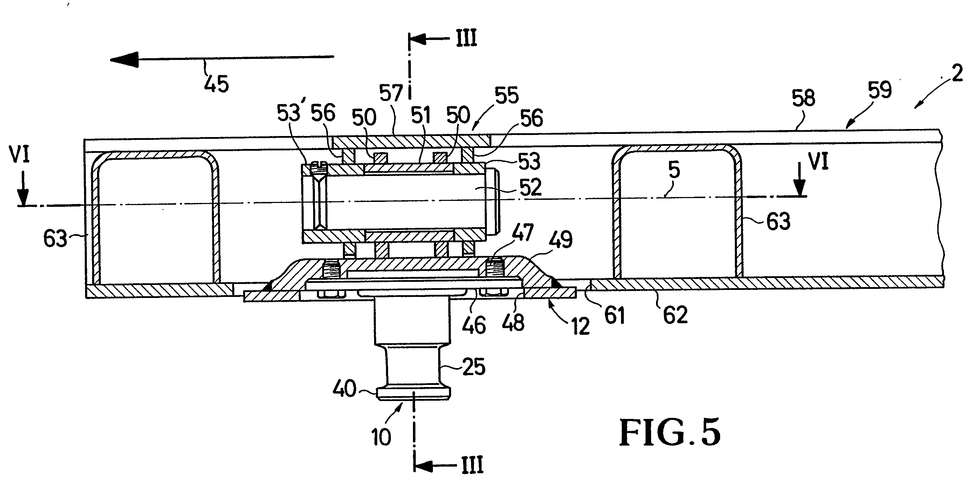

Die Fig. 2 bis 7 zeigen den Aufbau der Sattelkupplung 3 ausführlicher: Ihre Sattelkupplungsplatte 4 hat einen Einführungsschlitz 9 für einen Zugsattelzapfen 10. Der Zugsattelzapfen 10 ist an einer ebenen, die andere Sattelplatte bildenden Sattelanhängerplatte 12 befestigt, z.B. angeschweißt, die ihrerseits am Sattelanhänger 2 relativ zu diesem um die Längsachse 5 schwenkbar befestigt ist.

Der Einführungsschlitz 9 hat an seinem inneren (in Fahrtrichtung vorderen) Ende eine Vertiefung 13 mit einer den Boden der Vertiefung bildenden Schulter 14, deren Unterseite 15 tiefer als die Unterseite 16 der Kupplungsplatte 4 liegt und ballig ausgebildet ist. In der Vertiefung 13 ist ein etwa hufeisenförmiger Verschleißring 17 auswechselbar mittels Schrauben 18 (Fig. 2) auf der Schulter 14 befestigt. Der Verschleißring 17 steht radial nach innen über den Rand der Schulter 14 unter Einhaltung eines Spiels 19 zwischen Verschleißring 17 und Zugsattelzapfen 10 vor. Die inneren Kanten 20, 21 des Verschleißrings sind abgeschrägt. Sie können aber auch abgerundet sein. Darüber hinaus ist es möglich, die gesamte Anlagefläche A für den Zugsattelzapfen abzurunden.

Die Anlageseite der Sattelkupplungsplatte 4 für die Sattelanhängerplatte 12 ist zur Sattelanhängerplatte hin konvex ausgebildet, und zwar dadurch, daß sie in einem Bereich 22 außerhalb eines an den Einführungsschlitz 9 angrenzenden, weitgehend ebenen Anlagebereiches 23 für die Sattelanhängerplatte 12 konisch abfällt. Alternativ kann die gesamte Anlageseite der Sattelkupplungsplatte 4 zur Sattelanhängerplatte 12 hin gekrümmt oder gewölbt sein.

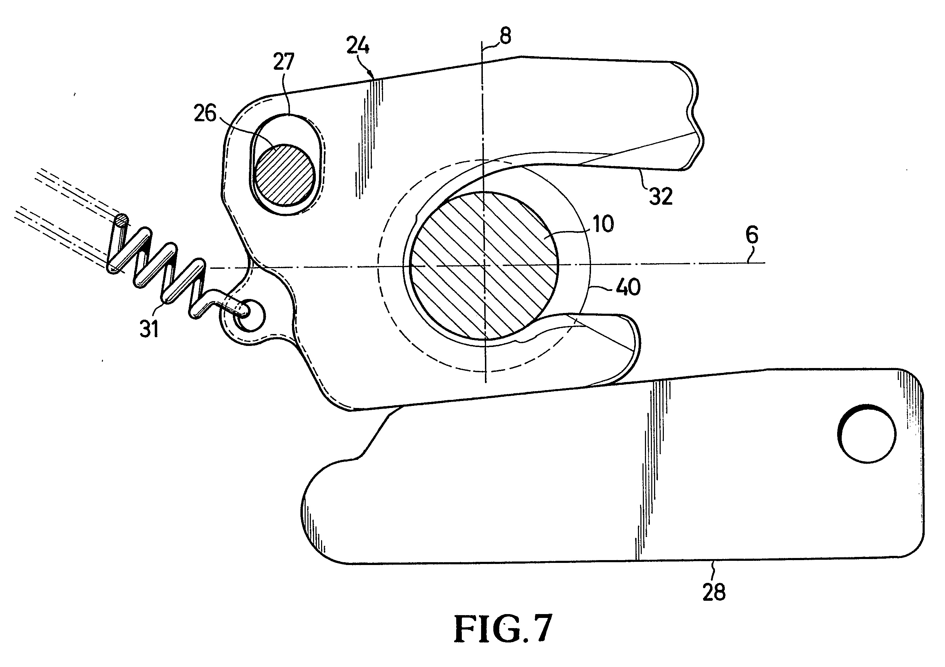

Unterhalb der Schulter 14 ist ein Verschlußhaken 24 für den Eingriff in eine Ringnut 25 am unteren Ende des Zugsattelzapfens 10 "schwimmend" an der Sattelkupplungsplatte 4 gelagert. Die "schwimmende" Lagerung ergibt sich da durch, daß der Verschlußhaken 24 nach Fig. 7 auf nur einem Lagerbolzen 26 gelagert ist, der mit verhältnismäßig großem, allseitigem Spiel durch ein Langloch 27 im Verschlußhaken 24 hindurchgeführt ist. Der Verschlußhaken 24 ist daher ebenfalls im Rahmen des Spiels zwischen Langloch 27 und Lagerbolzen 26 um die Längsachse 5 und die Querachse 6 schwenkbar. Der Verschlußhaken 24 dient der Sicherung des Zugsattelzapfens 10, der seinerseits durch einen quer verschiebbaren Verschlußriegel 28 (Fig. 2 und 7) gegen eine Drehung um den Lagerbolzen 26 aus der dargestellten Lage gesichert wird. Zum Auskuppeln wird der Verschlußriegel 28 mittels einer Zugstange 29 über einen an diese und den Verschlußriegel 28 angelenkten Hebel 30 zur Seite aus dem Einführungsschlitz 9 herausgezogen, so daß der Verschlußhaken 24 beim Herausführen des Zugsattelzapfens 10 nach hinten aus dem Einführungsschlitz 9 im Uhrzeigersinne um den Lagerbolzen 26 geschwenkt und umgekehrt beim Einkuppeln gegen die Kraft einer Zugfeder 31 durch das Anschlagen des Zugsattelzapfens 10 am längeren Arm 32 des Verschlußhakens 24 in die dargestellte Lage zurückgeschwenkt wird.

Die Sattelkupplungsplatte 4 ist ferner auf zwei seitlichen, an der Sattelzugmaschine 1 befestigten Lagerböcken 34 um Lagerbolzen 35, deren Längsmittelachse mit der Querachse 6 zusammenfällt, relativ zur Sattelzugmaschine 1 schwenkbar gelagert, wobei die Lagerbolzen 35 durch gummielastische Lagerhülsen 36 und vertikale Wände 37, 38 an der Unterseite der Kupplungsplatte 4 hindurchgeführt sind. Die Lagerhülsen 36 sind ihrerseits in Querbohrungen 39 der Lagerböcke 34 angeordnet.

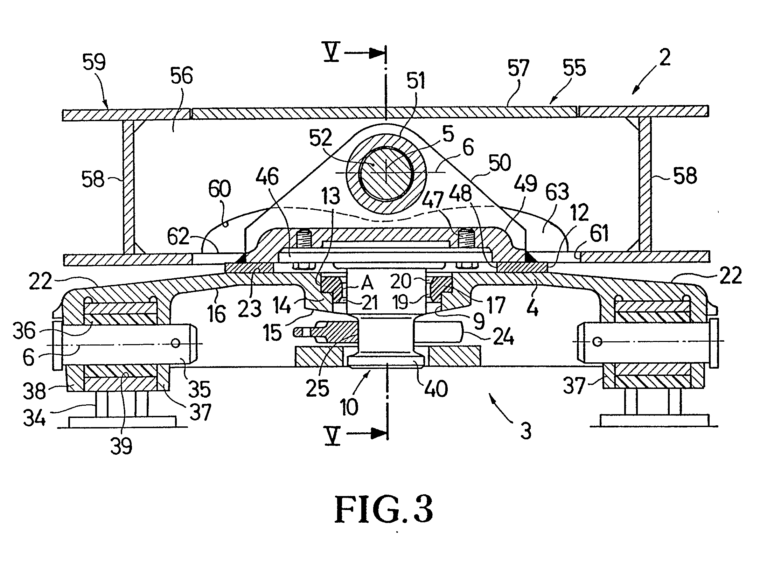

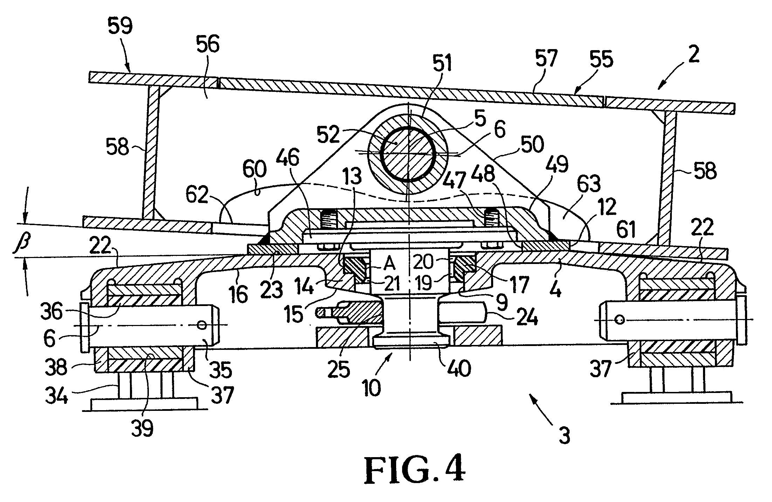

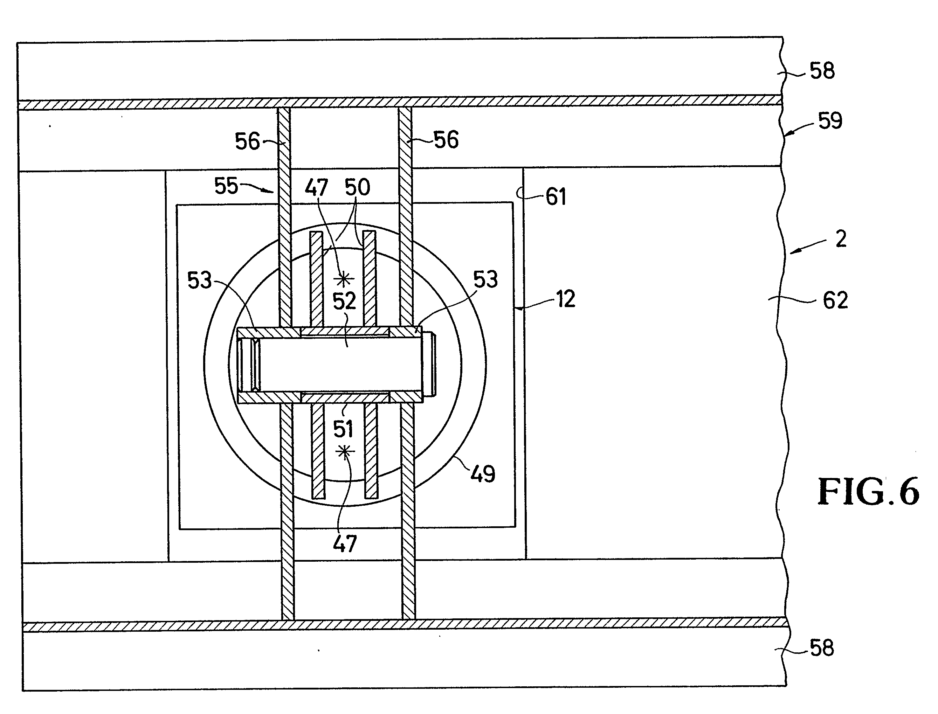

Der Zugsattelzapfen 10 ist mit einem Flansch 46 versehen, der mittels Schrauben 47 am Boden eines am Rand eines Durchbruchs 48 der Sattelanhängerplatte 12 angeschweißten Aufnahmetellers 49 befestigt ist. An der Oberseite des Aufnahmetellers 49 sind zwei parallele Querplatten 50 vertikal befestigt. An den Querplatten 50 ist eine Lagerbuchse 51 befestigt, in der ein Gelenkbolzen 52 gleitend gelagert ist. Die aus der Lagerbuchse 51 vorstehenden Endabschnitte des Gelenkbolzens 52 sind in zwei weiteren, mit der Lagerbuchse 51 fluchtenden Lagerbuchsen 53, 53' eines Lagerbocks 55 gelagert und axial gesichert. Die Lagerbuchsen 53 sind an zwei parallelen Querwänden 56 des Lagerbocks 55 und die Querwände 56 vertikal unter einer horizontalen Tragplatte 57 und zusammen mit dieser zwischen zwei sich in Fahrtrichtung 45 erstreckenden, doppel-T-förmigen Trägern 58 des Fahrgestells 59 des Sattelanhängers 2 befestigt, das sich im vorliegenden Fall zu einer starren Deichsel nach vorn verjüngt. Die Querwände 56 haben in ihrem unteren Rand eine Aussparung 60 (siehe Fig. 3 und Fig. 4), die den Aufnahmeteller 40 mit Spiel für die relative Querpendelung von Aufnahmeteller 49 und Sattelanhänger 2 um den Gelenkbolzen 52 bzw. die Längsachse 5 übergreift. Die Sattelanhängerplatte 12 liegt in einem Durchbruch 61 des Bodens 62 des Fahrgestells 59 und etwas tiefer als der Boden 62, wobei ein seitliches Spiel zwischen der Rand des Durchbruchs 61 und der Sattelanhängerplatte 12 für die Querpendelung vorgesehen ist. Zwei im Querschnitt U-förmige Querträger 63 verbinden die Träger 58, sind jedoch in Fig. 6 zur Vereinfachung der Darstellung weggelassen. Die Querplatten 50 sind mit der Lagerbuchse 51 und dem Aufnahmeteller 49 und die Querwände 56 mit den Lagerbuchsen 53, 53' der Tragplatte 57 sowie den Trägern 58 vorzugsweise durch Schweißen verbunden.

Bei ebenem Gelände nehmen der Sattelanhänger 2 und die Sattelkupplung 3 die in Fig. 3 dargestellte relative Lage ein. Wenn der Sattelanhänger 2 jedoch bei unebenem Gelände um die Längsachse 5 geneigt wird, behält die Sattelanhängerplatte 12 zunächst die dargestellte Lage relativ zur Sattelkupplungsplatte 4 bei. Dagegen legt sich die Unterseite des Sattelanhängers 2 bzw. des einen Trägers 58 bei zunehmendem Neigungswinkel β schließlich im konischen Bereich 22 der Sattelkupplungsplatte 4 wenigstens mit dem einen seitlichen Rand des Durchbruchs 61 auf, wie es in Fig. 4 dargestellt ist. Bis dahin liegt die Sattelanhängerplatte 12 auf dem ebenen Anlagebereich 23 der Oberseite der Sattelkupplungsplatte 4 auf, und der Verschlußhaken 24 hat einen vertikalen Abstand von der balligen Unterseite 15 der Schulter 14, wie es in Fig. 3 dargestellt ist. Wenn dagegen der Sattelanhänger 2 bei unebenem Gelände noch weiter um die Längsachse 5 geneigt wird, kann auch die am Sattelanhänger 2 befestigte Sattelanhängerplatte 12 zusammen mit dem Zugsattelzapfen 10 um die Längsachse 5 geneigt werden. Hierbei wird der Zugsattelzapfen 10 angehoben und geschwenkt, wobei sich sein unterer Bund 40 an der Unterseite des Verschlußhakens 24 anlegt und diesen ebenfalls schwenkt, bis sich der Verschlußhaken 24 an der balligen Unterseite 15 der Schulter 14 anlegt. Gleichzeitig kann sich die Unterseite des Sattelanhängers 2 in dem konisch abfallenden Bereich 22 der Sattelkupplungsplatte 4 wenigstens unter Linienberührung zwischen der Unterseite des Sattelanhängers 2 und der Sattelkupplungsplatte 4 weiter anlegen, wobei aufgrund einer gewissen elastischen Verformung in der Praxis eine Flächenberührung auftritt und die abgeschrägten Kanten 20, 21 des Verschleißrings 17 einen besonders großen Schwenkwinkelbereich ergeben. Da die Schräglage des Sattelanhängers 2 relativ zur Sattelkupplungsplatte 4 in der Regel nur kurzzeitig andauert, dauert die durch die Linienberührung bedingte höhere Flächenpressung zwischen der Unterseite des Sattelanhängers 2 und der Platte 4 ebenfalls nur entsprechend kurzzeitig an. Während normaler Fahrten auf ebenen Straßen ist dagegen eine verhältnismäßig großflächige Berührung zwischen den Platten 4, 12 im ebenen Anlagebereich 23 sichergestellt. Die Berührungsfläche im Anlagebereich 23 ist zwar geringer als bei einer Sattelkupplungsplatte 4 mit vollständig ebener Oberseite, so daß die zulässige Sattellast etwas geringer ist, doch gibt es zahlreiche Anwendungsfälle, in denen eine geringere Sattellast gefordert wird, insbesondere bei Sattel-Zentralachsanhängern, d.h. Anhängern mit einer oder zwei mehr zur Mitte ihrer Länge hin liegenden Radachse oder Radachsen, wie es durch die in Fig. 1 gestrichelt dargestellte Radachse 7' angedeutet ist.

Wenn der Abstand der Unterseite des Sattelanhängers 2 von der Oberseite der Sattelkupplungsplatte 4 größer gewählt werden kann, kann gegebenenfalls eine Sattelkupplungsplatte mit ebener Oberseite verwendet werden und dennoch ein hinreichender Neigungs- oder Schwenkwinkelbereich ß um die Längsachse bis zur Anlage der Unterseite bzw. einer Kante der Unterseite des Sattelanhängers 2 an der Oberseite der Sattelkupplungsplatte erreicht werden.

Bei der dargestellten Ausbildung kann der Schwenkwinkelbereich ß (Fig. 4) jedoch ohne Erhöhung des Abstands zwischen Sattelanhänger 2 und Sattelkupplungsplatte 4 noch weiter, bei entsprechend größerem Neigungswinkel des konischen Bereiches 22 der Sattelkupplungsplatte 4, erhöht werden.

Abwandlungen des dargestellten Ausführungsbeispiels können beispielsweise darin bestehen, daß die Sattelkupplungsplatte eben und die Sattelanhängerplatte auf ihrer der Sattelkupplungsplatte zugekehrten Seite konvex ausgebildet ist, beispielsweise ebenso wie die Sattelkupplungsplatte 4 oder über ihre gesamte Fläche konisch oder nur in einem äußeren Randbereich gewölbt. Auch die Sattelkupplungsplatte 4 kann alternativ in der Weise konvex sein, daß sie im Randbereich 22 nicht konisch, sondern gewölbt oder über ihre gesamte Fläche konisch oder gewölbt ist.

## Ansprüche

1. Kupplungseinrichtung zum Verbinden eines ziehenden und eines gezogenen Fahrzeugs, mit einer weitgehend horizontalen Sattelplatte an dem einen Fahrzeug, die beim Verbinden der Fahrzeuge mit einer Sattelplatte an dem anderen Fahrzeug zur Anlage kommt und um eine sich in Fahrtrichtung erstreckende Längsachse und eine Querachse schwenkbar ist, wobei die eine Sattelplatte einen Einführungsschlitz zum Einführen eines an der anderen Sattelplatte befestigten Zugsattelzapfens mit einem Spiel zwischen Einführungsschlitz und Zugsattelzapfen aufweist und unter der einen Sattelplatte ein Verschlußhaken für den Eingriff in eine Ringnut des Zugsattelzapfens schwimmend gelagert ist, **dadurch gekennzeichnet,** daß die am gezogenen Fahrzeug (2) angebrachte, den Zugsattelzapfen (10) tragende Sattelplatte (12) um die Längsachse (5) relativ zum gezogenen Fahrzeug (2) schwenkbar gelagert ist.

2. Kupplungseinrichtung nach Anspruch 1, **dadurch gekennzeichnet,** daß eine der Sattelplatten (4, 12) auf ihrer Anlageseite konvex ist.

3. Kupplungseinrichtung nach Anspruch 1 oder 2, bei der die eine Sattelplatte am Rande des inneren Endes des Einführungsschlitzes mit einer auf der Unterseite der einen Sattelplatte vorstehenden Schulter versehen is, unter der der Verschlußhaken gelagert ist,

**dadurch gekennzeichnet,** daß die Unterseite (15) der Schulter (14) zum Verschlußhaken (24) hin konvex ist.

4. Kupplungseinrichtung nach Anspruch 3, **dadurch gekennzeichnet,** daß die Unterseite (15) der Schulter (14) ballig ausgebildet ist.

5. Kupplungseinrichtung nach Anspruch 3 oder 4, **dadurch gekennzeichnet,** daß die Anlageseite der einen Sattelplatte (4) in einem Bereich (22) außerhalb eines an den Einführungsschlitz (9) angrenzenden, weitgehend ebenen Anlagebereiches (23) für die andere Sattelplatte (12) abfällt.

6. Kupplungseinrichtung nach Anspruch 5, **dadurch gekennzeichnet,** daß die Anlageseite der einen Sattelplatte (4; 42) außerhalb des weitgehend ebenen Anlagebereiches (23) einen konischen Bereich (22) aufweist.

7. Kupplungseinrichtung nach Anspruch 6, **dadurch gekennzeichnet,** daß der Übergang vom weitgehend ebenen Anlagebereich (23) zum konischen Bereich (22) abgerundet ist.

8. Kupplungseinrichtung nach einem der Ansprüche 3 bis 7, **dadurch gekennzeichnet,** daß die Kanten (20, 21) der Anlagefläche (A) für den Zugsattelzapfen (10) abgeschrägt oder abgerundet sind.

9. Kupplungseinrichtung nach einem der Ansprüche 3 bis 7, **dadurch gekennzeichnet,** daß die Anlagefläche (A) für den Zugsattelzapfen (10) abgerundet ist.

FIG.1

**FIG. 2**

FIG.3

FIG.4

EP 0 319 765 A2

FIG.5

EP 0 319 765 A2

FIG.6

EP 0 319 765 A2

FIG.7

EP 0 319 765 A2